# EUROPEAN PATENT SPECIFICATION

(11) **EP 4 328 055 B1**
(45) Date of publication and mention of the grant of the patent: **17.06.2026**
(21) Application number: 22191390.8
(22) Date of filing: 22.08.2022
(51) Int. Cl.: B60J 7/043, G02F 1/1345, G02F 1/17, G02F 1/155, G02F 1/1343, B32B 17/10, G02F 1/1334

(54) **TRANSPARENT ROOF ASSEMBLY COMPRISING A SEGMENTED OPTICALLY SWITCHABLE PANEL**
TRANSPARENTE DACHANORDNUNG MIT EINER SEGMENTIERTEN OPTISCH SCHALTBAREN PLATTE
ENSEMBLE TOIT TRANSPARENT COMPRENANT UN PANNEAU OPTIQUEMENT COMMUTABLE SEGMENTÉ

(43) Date of publication of application: 28.02.2024
(73) Proprietor: Inalfa Roof Systems Group B.V., 5807 GW Oostrum (NL)
(72) Inventor: Geurts, Stephan Paulus Jan, 5951 BS Belfeld (NL); De Bie, Sander, 6361 XB Nuth (NL)
(74) Representative: De Vries & Metman

(56) References cited:
- WO-A1-2021/209474
- US-A1- 2021 356 772
- US-A1- 2021 379 968

## Description

The invention relates to a transparent roof assembly for a vehicle roof and in particular to such a transparent roof assembly comprising a segmented optically switchable panel.

Segmented electrically switchable sunroofs for vehicles are described for example in WO 2021/209474 A1, US 2021/356772 A1, and US 2021/379968 A1.

An open-roof assembly is well-known. The open-roof assembly is configured to be mounted in a vehicle roof and comprises at least one moveably arranged closure member. The closure member is configured and arranged to cover an opening in the vehicle roof or at least partly uncover the opening in the vehicle roof. Usually, but not necessarily, the closure member is a transparent panel and comprises glass or a suitable plastics. The closure member may be configured to tilt or to slide.

Further, it is known to provide a fixed, usually transparent panel in the vehicle roof of a passenger compartment to enable a sky view through the roof of the vehicle, for example, for any occupants in the passenger compartment.

In either of the above-mentioned vehicle roofs, a transparent panel may be optically switchable. An optically switchable panel, as used herein, is a panel of which an optical property may be changed by an occupant. In particular, the optical property of the optically switchable panel may be changed by application of an electric field. Different kinds of such an optically switchable panel are known. For example, an electrochromic panel is known. Further, a number of kinds of such a panel that apply a liquid crystal layer are known. Some examples of the latter kind comprise a PDLC (polymer dispersed liquid crystal) layer, a SPD (suspended particle device) layer or a GHLC (guest host liquid crystal) layer.

The optically switchable panel may comprise two electrode layers between which an optically switchable material is provided. A suitable electric voltage may be applied on these electrodes to thereby provide an electric field between the electrodes. The electric field induces the change of the optical property of the optically switchable material.

Depending on the kind of switchable material applied, the electric voltage may be preferred to be an alternating (AC) voltage or a DC voltage. Further, a preferred voltage level may be dependent on the kind of switchable material and other properties. Usually, however, the voltage level is relatively high, i.e. higher than a battery voltage of a vehicle. So, the voltage level may need to be transformed to a higher voltage and/or may be transformed from a DC voltage to an AC voltage.

For a segmented optically switchable panel, which comprises multiple segments that may be optically switched independently from each other, a relatively large number of individual connections between a driver circuitry and the optically switchable panel are needed, for which no cost-effective connection means meeting automotive regulations are readily available. In particular, a suitable and cost-effective connection means for connecting separated electrode segments of at least one of the electrode layers is not readily available.

In a first aspect, a transparent roof assembly for a vehicle roof according to claim 1 is provided. The transparent roof assembly comprises a segmented optically switchable panel. The segmented optically switchable panel comprises a switchable area and an opaque area. Structurally, the segmented optically switchable panel comprises a common electrode layer, a signal electrode layer and a switchable material layer, wherein the switchable material layer is arranged between the common electrode layer and the signal electrode layer.

The signal electrode layer comprises at least two electrode segments. Each electrode segment comprises an active section and an electrically conductive section. The active section provides an optically switchable segment in the switchable area of the segmented optically switchable panel, the optically switchable segment comprising a first optical state and a second optical state different from the first optical state. The electrically conductive section is arranged in the opaque area and comprises an external connection pad, the electrically conductive section thereby providing an electrically conductive path for an electric current. At least one electrically conductive section comprises a first width at a boundary between the active section and the electrically conductive section and comprises a second width at the external connection pad, wherein the first width and the second width being substantially perpendicular to a direction of the electric current, which in operation flows between the external connection pad and the optically switchable segment, wherein the second width is smaller than the first width.

A reduced width of the signal electrode segment at the external connection pad provides increased design freedom for arranging the external connection pads of the signal electrode segments. Suitably arranging the external connection pads enables the use of readily available, cost-effective connection means. Depending on other requirements, a suitable arrangement of the external connection pads and a correspondingly suitable connection means may be selected.

It is noted that the common electrode layer may be segmented as well, although this is not required. Further, the wording and terms used, in particular the use of the terms 'signal electrode' and 'common electrode', are selected for sake of clarity and, therefore, do not imply anything about a voltage level, a switching connection or any other aspect of the electronic driving of the optically switchable segments. Any person skilled in the art of electronic driving circuitry is considered to be able to select a suitable driving circuitry and method for operating the segmented optically switchable panel. The present invention is in not any aspect limited to the electronic driving circuitry or driving method.

In an embodiment of the transparent roof assembly, at least two external connection pads are arranged adjacent to each other and a connection element is provided, the connection element comprising at least two electrically conductive leads, wherein each external connection pad is electrically connected to one of the electrically conductive leads. Such a connection element may be a flexible printed circuit (FPC), for example. Readily available FPC's have a short length compared to the usual size of an optically switchable panel used in a vehicle roof. Use of bespoke longer FPC's is not cost-effective. With suitably arranged external connection pads, the readily available FPC's may be used.

In an embodiment of the transparent roof assembly, the signal electrode layer comprises at least four electrode segments and at least four corresponding external connection pads, wherein two external connection pads are arranged adjacent to each other in a first group and two other external connection pads are arranged adjacent to each other in a second group. A first and a second connection element are provided, wherein each connection element comprises at least two electrically conductive leads. Each external connection pad of the first group is electrically connected to one of the electrically conductive leads of the first connection element and each external connection pad of the second group is electrically connected to one of the electrically conductive leads of the second connection element. Using multiple groups of external connection pads and corresponding multiple connection elements, even more design freedom is obtained. In particular, the design freedom may be used to select a higher conductivity from external connection pad to the active section of the signal electrode segment, since a length of the electrically conductive section may be kept shorter and/or wider.

In an embodiment of the transparent roof assembly, the signal electrode layer is arranged on a signal electrode carrier, at least two external connection pads are arranged in a signal connection section on the signal electrode carrier in the opaque area. Further, the common electrode layer is arranged on a common electrode carrier, at least one common connection pad being arranged in a common connection section, wherein the common connection section is opposite to the signal connection section. Even further, a connection element is arranged between the signal connection section and the common connection section, the connection element comprising a first surface and a second surface opposite the first surface, a signal lead being arranged on the first surface and being in electrically conductive contact with at least one external connection pad and a common lead being arranged on the second surface and being in electrically conductive contact with at least one common connection pad. In this embodiment, a dual-sided connection element, i.e. a connection element having electrically conductive leads on both of its opposing surfaces, may be arranged between the external connection pads of the signal electrode and the common electrode, providing an external connection to both electrodes with a single connection element.

In a particular embodiment of the transparent roof assembly comprising a connection element, the segmented optically switchable panel comprises a circumferent edge and the connection element comprises an external connection section, wherein the external connection section extends beyond the circumferent edge of the segmented optically switchable panel, the external connection section being configured to connect to an external circuitry.

In an embodiment of the transparent roof assembly, the segmented optically switchable panel is moveably arranged and a flexible cable is arranged between a frame of the transparent roof assembly and the moveably arranged segmented optically switchable panel.

In an aspect, a vehicle comprising an embodiment of the above-described vehicle roof assembly is provided.

Further scope of applicability of the present invention will become apparent from the detailed description given hereinafter. However, it should be understood that the detailed description and specific examples, while indicating embodiments of the invention, are given by way of illustration only, since various changes and modifications within the scope of the invention will become apparent to those skilled in the art from this detailed description with reference to the appended schematical drawings, in which:
- Fig. 1A: shows a perspective view of a vehicle roof with an open roof assembly;
- Fig. 1B: shows an exploded view of the open roof assembly of Fig. 1A;
- Fig. 2A: shows a plan view of a first generic embodiment of an optically switchable fixed panel;
- Fig. 2B: shows an enlarged view of a part of the optically switchable fixed panel of Fig. 2A;
- Fig. 3A: shows a cross-sectional view of a first detailed embodiment of the optically switchable fixed panel of Fig. 2A;
- Fig. 3B: shows a plan view of a second detailed embodiment of the optically switchable fixed panel of Fig. 2A;
- Fig. 3C: shows a cross-sectional view of a third detailed embodiment of the optically switchable fixed panel of Fig. 2A;
- Fig. 4A: shows a plan view of a second generic embodiment of an optically switchable fixed panel;
- Fig. 4B: shows a plan view of a third generic embodiment of an optically switchable fixed panel;
- Fig. 5A: shows a plan view of a fourth generic embodiment of an optically switchable fixed panel; and
- Fig. 5B: shows a perspective view of the fourth generic embodiment of an optically switchable fixed panel of Fig. 5A.

The present invention will now be described with reference to the accompanying drawings, wherein the same reference numerals have been used to identify the same or similar elements throughout the several views.

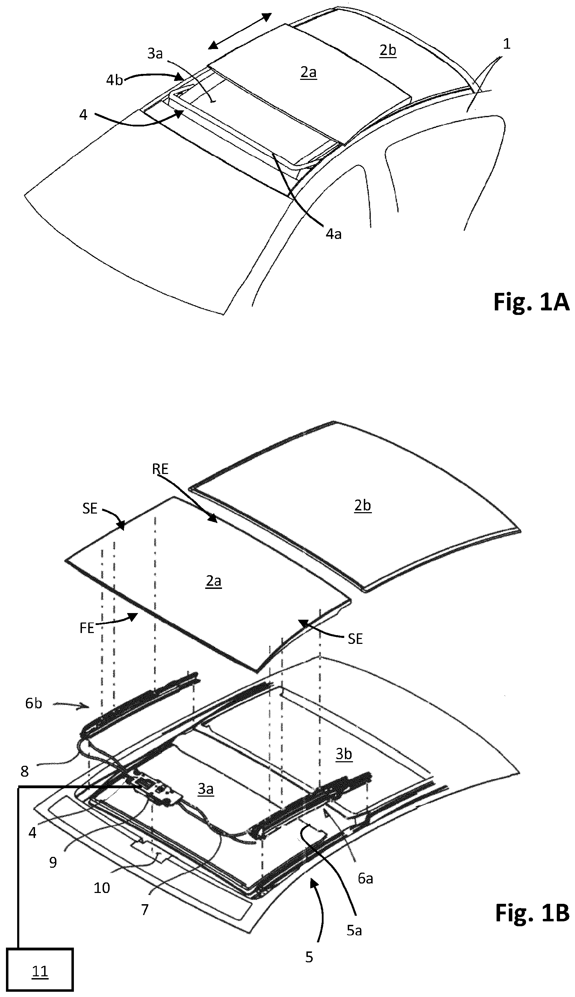

Fig. 1A illustrates a vehicle roof 1 having an open roof assembly arranged therein. The open roof assembly comprises a moveable panel 2a and a fixed panel 2b. The moveable panel 2a is also referred to as a closure member, since the moveable panel 2a is moveable over a first roof opening 3a such to enable to open and to close the first roof opening 3a. A wind deflector 4 is arranged at a front side of the first roof opening 3a.

In the illustrated embodiment, the moveable panel 2a may be in a closed position, which is a position wherein the moveable panel 2a is arranged over and closes the first roof opening 3a and thus usually is arranged in a plane of the vehicle roof 1. Further, the moveable panel 2a may be in a tilted position, which is a position wherein a rear end RE of the moveable panel 2a is raised as compared to the closed position, while a front end FE of the moveable panel 2a is still in the closed position. Further, the moveable panel 2a may be in an open position, which is a position wherein the moveable panel 2a is slid open and the first roof opening 3a is partly or completely exposed.

It is noted that the illustrated vehicle roof 1 corresponds to a passenger car. The present invention is however not limited to passenger cars. Any other kind of vehicles that may be provided with a moveable panel are contemplated as well.

Fig. 1B illustrates the same vehicle roof as shown in Fig. 1A having panels 2a and 2b. In particular, while Fig. 1A shows the open roof assembly in the open position, Fig. 1B is an exploded view of the open roof assembly in a closed position. Further, in this exploded view of Fig. 1B, it is shown that there is a second roof opening 3b. The first and second roof openings 3a, 3b are provided in a frame 5 of the open roof assembly. An edge 5a of the frame 5 defines the first roof opening 3a.

The second roof opening 3b is arranged under the fixed panel 2b such that light may enter a vehicle interior passenger compartment through the fixed panel 2b, presuming that the fixed panel 2b is a glass panel or a similarly transparent panel, for example made of a plastic material or any other suitable material. The second roof opening 3b with a transparent or translucent fixed panel 2b is optional and may be omitted in another embodiment of the open roof assembly. In another embodiment, a single fixed panel 2b may be employed. Further, either or both of the moveable panel 2a and the fixed panel 2b may be an optically switchable transparent panel, as described hereinafter in more detail.

The wind deflector 4 is commonly a flexible material, e.g. a woven or non-woven cloth having through holes arranged therein or a web or net. The flexible material is supported by a support structure 4a, e.g. a bar-like or tube-like structure, which structure is hingedly coupled, directly or indirectly, to the frame 5 at a hinge 4b.

The wind deflector 4 is arranged in front of the first roof opening 3a and adapts air flow when the moveable panel 2a is in the open position. In its raised position, the wind deflector 4 reduces inconvenient noise due to air flow during driving. When the moveable panel 2a is in the closed position or in the tilted position, the wind deflector 4 is held down below the front end FE of the moveable panel 2a.

Usually, the wind deflector 4 is raised by a spring force when the moveable panel 2a slides to an open position and the wind deflector 4 is pushed down by the moveable panel 2a when the moveable panel 2a slides back into its closed position. In Fig. 1A, the moveable panel 2a is shown in an open position and the wind deflector 4 is shown in a raised position. In Fig. 1B, the moveable panel 2a is shown in a closed position and the wind deflector 4 is correspondingly shown in a position in which it is held down.

Fig. 1B further illustrates a drive assembly having a first guide assembly 6a, a second guide assembly 6b, a first drive cable 7 and a second drive cable 8. The first and second guide assemblies 6a, 6b are arranged on respective side ends SE of the moveable panel 2a and may each comprise a guide and a mechanism. The guide is coupled to the frame 5, while the mechanism comprises moveable parts and is slideably moveable in the guide. The first and the second drive cables 7, 8 are provided between the mechanisms of the respective guide assemblies 6a, 6b and a electric motor 9.

The drive cables 7, 8 couple the electric motor 9 to the mechanisms of the respective guide assemblies 6a, 6b such that upon operating the electric motor 9, the mechanisms start to move. In particular, a core of the drive cable 7, 8 is moved by the electric motor 9 such to push or pull on the mechanisms of the respective guides 6a, 6b. Such a drive assembly is well known in the art and is therefore not further elucidated herein. Still, any other suitable drive assembly may be employed as well without departing from the scope of the present invention. Moreover, in a particular embodiment, an electric motor may be operatively arranged between the respective guides and the respective mechanisms of the guide assemblies 6a, 6b and, in such embodiment, a drive assembly may be omitted completely.

In the illustrated embodiment, the guide assemblies 6a, 6b may start movement with raising the rear end RE of the moveable panel 2a, thereby bringing the moveable panel 2a in the tilted position. Then, from the tilted position, the guide assemblies 6a, 6b may start to slide to bring the moveable panel 2a in the open position. The present invention is however not limited to such embodiment. For example, in another embodiment, the moveable panel 2a may be moveable to a tilted position by raising the rear end RE, while an open position is reached by first lowering the rear end RE and then sliding the moveable panel 2a under the fixed panel 2b or any other structure or element provided behind the rear end RE of the moveable panel 2a. In further exemplary embodiments, the moveable panel 2a may be merely moveable between a closed position and a tilted position or between a closed position and an open position.

In the illustrated embodiment, the electric motor 9 is mounted near or below the front end FE of the moveable panel 2a at a recess 10. In another embodiment, the electric motor 9 may be positioned at any other suitable position or location. For example, the electric motor 9 may be arranged near or below the rear end RE of the moveable panel 2a or below the fixed panel 2b.

A control module 11 is schematically illustrated and is operatively coupled to the electric motor 9. The control module 11 may be any kind of processing module, either a software controlled processing module or a dedicated processing module, like an ASIC, which are both well known to those skilled in the art. The control module 11 may be a stand-alone control module or it may be operatively connected to another control module, like a multipurpose, generic vehicle control module. In yet another embodiment, the control module 11 may be embedded in or be part of such a generic vehicle control module. Essentially, the control module 11 may be embodied by any control module suitable for, capable of and configured for performing operation of the electric motor 9 and thus the moveable roof assembly.

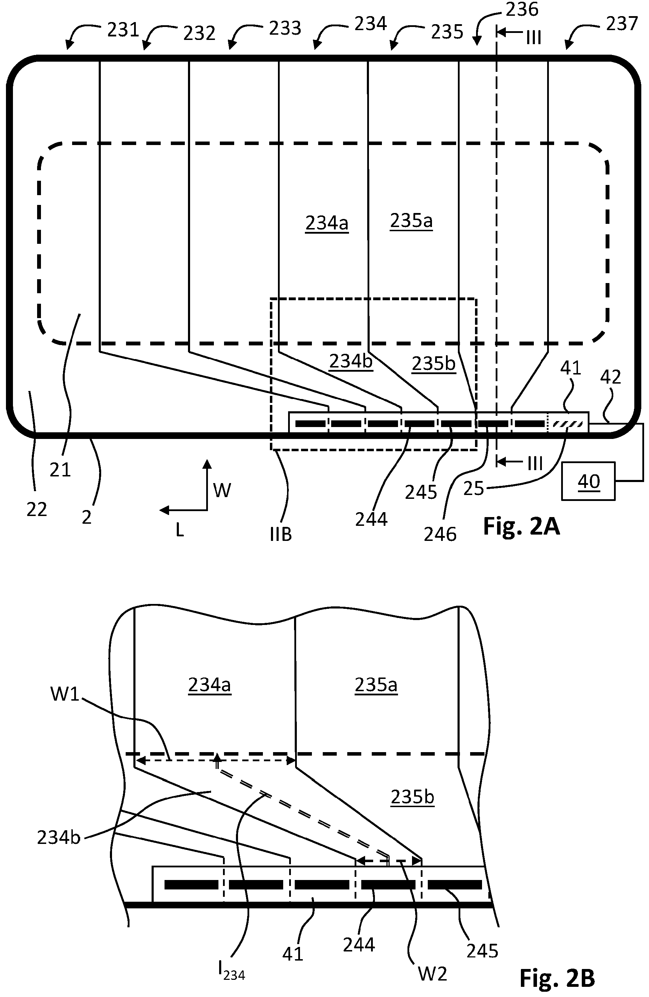

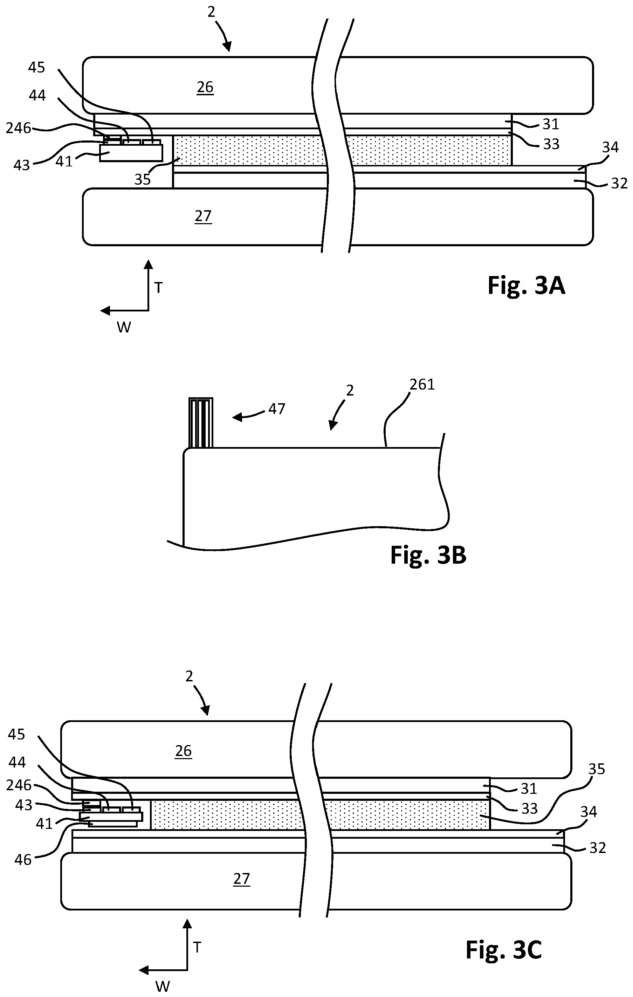

Fig. 2A shows a top view of an optically switchable transparent, fixed panel 2. A part IIB of the fixed panel 2 is illustrated in Fig. 2B. Referring to Figs. 2A and 2B, the fixed panel 2 is an embodiment of a segmented optically switchable panel. The segmented optically switchable panel 2 comprises a common electrode layer, a signal electrode layer and a switchable material layer, wherein the switchable material layer is arranged between the common electrode layer and the signal electrode layer. A transparency of the switchable material layer depends on a voltage applied over the common electrode layer and the signal electrode layer, as is described hereinafter in relation to Fig. 3A in more detail.

The segmented optically switchable panel 2 comprises a switchable area 21 and an opaque area 22. In the illustrated embodiment, the opaque area 22 is arranged along an edge of the panel 2, while the switchable area 21 is enclosed by the opaque area 22. Such an opaque area is well known in the art and further details thereof are therefore omitted herein. In any case, the opaque area 22 is commonly provided to remove the frame 5 from view. Further, in this embodiment, the opaque area 22 may remove any electrical components for optically switching transparency of the optically switchable area 21 from view.

One of the electrode layers of the panel 2 is divided in a number of segments, in particular in seven segments 231 - 237. The segmented electrode layer is referred to herein as the signal electrode layer. Each segment 231- 237 overlaps with the opaque area 22 and the optically switchable area 21. For example, a fourth segment 234 comprises a fourth active section 234a providing an optically switchable segment in the switchable area 21 of the segmented optically switchable panel 2 and a fourth electrically conductive section 234b in the opaque area. The fourth electrically conductive section 234b comprises a fourth external connection pad 244 and provides an electrically conductive path for an electric current I₂₃₄ from the fourth external connection pad 244 to the fourth active section 234a. Adjacent to the fourth segment 234, a fifth segment 235 comprises a fifth active section 235, a fifth electrically conductive section 235b and a fifth external connection pad 245. Similarly, a first segment 231, a second segment 232, a third segment 233, a sixth segment 236 and a seventh segment 237 are provided with respective active sections, respective electrically conductive sections and respective external connection pads.

As an example, the fourth and fifth electrically conductive sections 234b and 235b are shown in more detail in Fig. 2B. In particular, the electric current I₂₃₄ is indicated. A dashed arrow I₂₃₄ indicates a main direction of the electric current I₂₃₄ flowing from the fourth external connection pad 244 to the fourth active section 234a, as above described. It is however noted that, in another embodiment, the electric current I₂₃₄ may flow in an opposite direction.

Further, it is noted that the fourth electrically conductive section 234b may be formed by a relatively thin layer of electrically conductive material and the electric current may thus be expected not to be constrained in a centre portion of the fourth electrically conductive section 234b. The electric current I₂₃₄ may be spread over a first width W1 of the fourth electrically conductive section 234b near the fourth active section 234a, while the electric current I₂₃₄ may be spread over a second width W2 of the fourth electrically conductive section 234b near the external connection pad 244. The fourth electrically conductive section 234b has an essentially tapered shape, wherein the second width W2 is smaller than the first width W1, to accommodate a difference in width of the fourth active section 234a and the fourth external connection pad 244.

A connection element 41 is arranged over and in electrical contact with the external connection pads, including the fourth and fifth external connection pads 244, 245. A common external connection pad 25 may be arranged on an opposite surface of the connection element 41 to provide for an electrically conductive coupling to the common electrode layer (see e.g. Fig. 3C). The connection element 41 may be operatively coupled to a control unit 40 through a suitable wiring 42, for example. In another embodiment, the control unit 40 may be arranged on the connection element 41, in which embodiment, the wiring 42 may be omitted. The connection element 41 may be a flexible printed circuit (FPC) as known in the art.

Since common and cost-effective FPC's are relatively short, i.e. shorter than a length (dimension in the direction L as indicated in Fig. 2A) of the panel 2, the external connection pads have been selected to be short and to be arranged close to each other such that a common and cost-effective short FPC may connect to as many external connection pads as possible. Thereto, the electrically conductive sections of the segments 231 - 237 have been shaped - e.g. tapered as above described - and arranged to provide for a suitable electrically conductive path between the external connection pads and the active sections.

Fig. 3A shows a cross-section along line III-III in Fig. 2A in accordance with a first embodiment of the panel 2. In this embodiment, the panel 2 comprises a stack of relatively thin layers, that provide for the optical switching functionality, between a first rigid layer 26, like a glass or plastic pane, and a second rigid layer 27, like a glass or plastic pane. However, one or both of the rigid layers 26, 27 may exhibit flexibility when taken separately, while they in combination provide for rigidity of the panel 2.

In this embodiment, the above-mentioned stack of layers between the rigid layers 26, 27 comprises a first foil layer 31, a signal electrode layer 33, an optically switchable material layer 35, a common electrode 34 and a second foil layer 32. In another embodiment, the first and second foil layers 31, 32 may be omitted, by providing the signal and common electrode layers 33, 34 directly on the rigid layers 26, 27. Moreover, in an embodiment, the stack of layers 31 - 35 may exhibit rigidity as well. The construction and arrangement of the stack of thin layers 31 - 35 is well known in the art and is therefore not further elucidated herein. Further, in certain embodiments, additional layers may be present, such as an infrared filtering layer, an UV filtering layer and the like, for example.

As illustrated in Fig. 3A, near an edge of the rigid layers 26, 27, the first foil layer 31 and the signal electrode layer 33 extend beyond an edge of the optically switchable material layer 35, thereby exposing the signal electrode layer 33. A sixth external connection pad 246 (see also Fig. 2A) is arranged in electrical contact with the signal electrode layer 33. The connection element 41 comprises first, second and third conductive leads 43, 44, 45, respectively, wherein the first conductive lead 43 is in electrical contact with the sixth external connection pad 246. The connection element 41 may extend beyond an edge of the rigid layers 26, 27 for an external connection to another component, such as control unit 40 (Fig. 2A) or the like. Fig. 3B shows an exemplary embodiment, wherein an external connection section 47 of the connection element 41 extends beyond a circumferent edge 261 of the panel 2.

Fig. 3C illustrates another embodiment of the panel 2 shown in cross-section along line III-III of Fig. 2A. This embodiment corresponds mainly to the embodiment of Fig. 3A, except that the second foil 32 and the common electrode layer 34 extend beyond the same edge of the optically switchable material layer 35 as the first foil 31 and the signal electrode layer 33 such that the connection element 41 is arranged between both the signal electrode layer 33 and the common electrode layer 34.

A fourth conductive lead 46 is provided at an opposite surface of the connection element 41 compared to the surface of the first, second and third conductive leads 43, 44, 45. The fourth conductive lead 46 is in electrical contact with the common external connection pad 25, which is not shown in the cross-sections of Figs. 3A and 3C (see Fig. 2A).

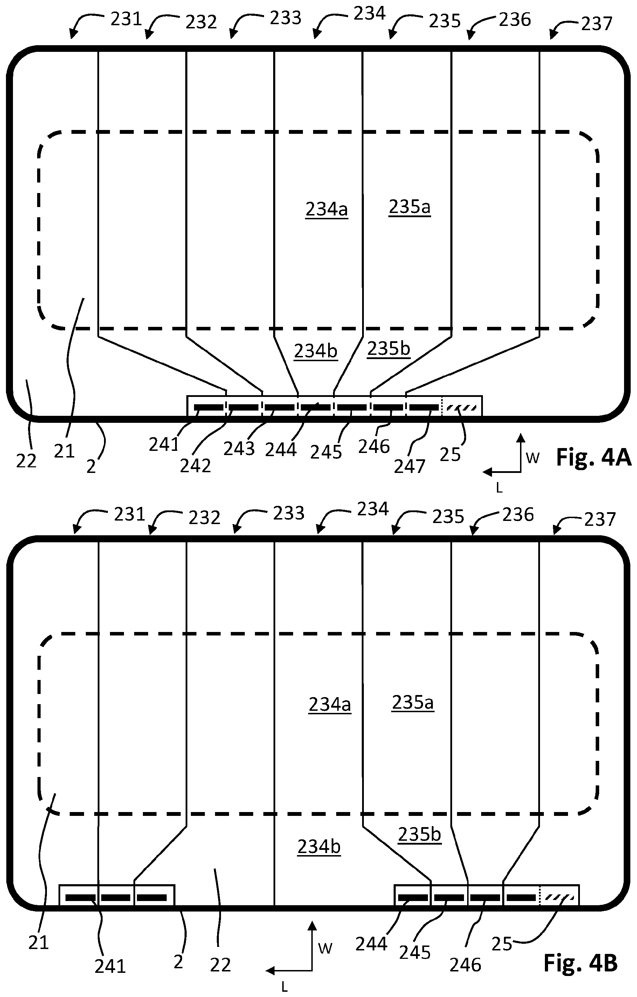

Fig. 4A illustrates another embodiment of the optically switchable panel 2, wherein - compared to the embodiment of Fig. 2A - the external connection pads 241 - 247, 25 are arranged in a central portion along the length (dimension in the length direction L) of the panel 2, instead of near a corner portion of the panel 2. This may provide a higher mean conductivity through the electrically conductive sections of the segments 231 - 237, thereby allowing a higher mean current to the optically switchable material and thus improving the switching capability. This may be achieved by designing the shape of the electrically conductive sections to have a relatively large width over their lengths in the direction of the current (see Fig. 2B: current I₂₃₄, first width W1 and second width W2).

To further increase an average width of the electrically conductive sections, the external connection pads may be grouped in two separate groups as illustrated in another embodiment in Fig. 4B. As apparent to those skilled in the art, an increase of conductivity may also be achieved by increasing a (local) thickness of the signal electrode layer, selection of a material of the signal electrode layer, for example.

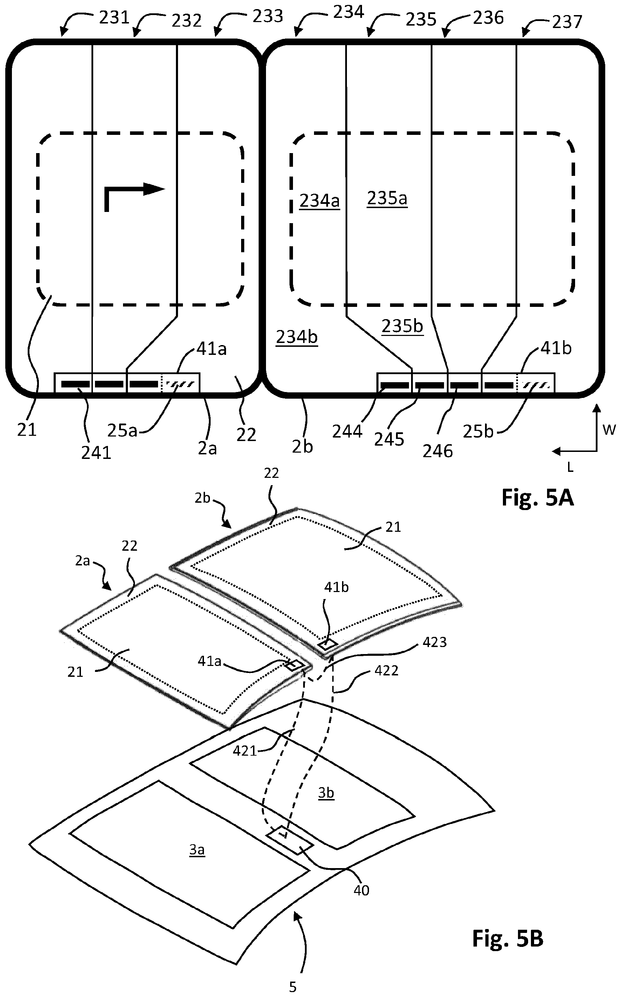

The above-mentioned separation in two or more groups of external connection pads may also be used in a transparent roof assembly wherein at least one of two or more panels are moveably arranged. Such an embodiment is illustrated in Fig. 5A, wherein a first panel 2a is moveably arranged and a second panel 2b is fixedly arranged. In this embodiment, the common electrode layer is divided into two separate segments as well, obviously. Therefore, in this embodiment, first and a second common external connection pads 25a, 25b are provided.

As illustrated in Fig. 5B, showing the embodiment of Fig. 5A in a perspective view, external connection wiring may be running from the frame 5 to a first connection element 41a and a second connection element 41b on the panels 2a, 2b through separate wirings 421, 422, respectively, or a daisy chain configuration may be applied, wherein a first wiring 421 runs from the frame 5 to the first panel 2a and a third wiring 423 runs between the first panel 2a and the second panel 2b, for example.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in expectedly any appropriately detailed structure. In particular, features presented and described in separate dependent claims may be applied in combination and any advantageous combination of such claims are herewith disclosed.

Further, it is contemplated that structural elements may be generated by application of three-dimensional (3D) printing techniques. Therefore, any reference to a structural element is intended to encompass any computer executable instructions that instruct a computer to generate such a structural element by three-dimensional printing techniques or similar computer controlled manufacturing techniques. Furthermore, any such reference to a structural element is also intended to encompass a computer readable medium carrying such computer executable instructions.

Further, the terms and phrases used herein are not intended to be limiting, but rather to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

The invention being thus described it is apparent that the same may be varied in many ways. Such variations are not to be regarded as a departure from the scope of the invention defined by the following claims.

## Claims

1. A transparent roof assembly for a vehicle roof (1) the transparent roof assembly comprising a segmented optically switchable panel (2), the segmented optically switchable pane (2) comprising a switchable area (21) and an opaque area (22), wherein the segmented optically switchable panel (2) comprises a common electrode layer (34), a signal electrode layer (33) and a switchable material layer (35), wherein the switchable material layer (35) is arranged between the common electrode layer (34) and the signal electrode layer (33),
the signal electrode layer (33) comprising at least two electrode segments (231-237), each electrode segment (231-237) comprising:
• an active section (234a,235a) providing an optically switchable segment in the switchable area (21) of the segmented optically switchable panel (2),
the optically switchable segment comprising a first optical state and a second optical state different from the first optical state; and
• an electrically conductive section (234b, 235b) in the opaque area (22), the electrically conductive section (234b,235b) comprising an external connection pad (244,245), the electrically conductive section (234b, 235b) thereby providing an electrically conductive path for an electric current; and
wherein at least one electrically conductive section (234a) comprises a first width (W1) at a boundary between the active section (234a,235a) and the electrically conductive section (234b,235b) and comprises a second width (W2) at the external connection pad (244, 245), the first width (W1) and the second width (W2) being substantially perpendicular to the width of the optically switchable panel (2),
wherein the electric current, in operation, flows between the external connection pad (244,245) and the optically switchable segment, and wherein the second width (W2) is smaller than the first width (W1),
wherein the signal electrode layer (33) is arranged on a signal electrode carrier (26), at least two external connection pads (244,245) are arranged in a signal connection section (234b,235b) on the signal electrode carrier (26) in the opaque area (22);
the common electrode layer (34) is arranged on a common electrode carrier (27), at least one common connection pad (25) being arranged in a common connection section, **characterized in that** the common connection section is opposite to the signal connection section; and
a connection element (41) is arranged between the signal connection section and the common connection section, the connection element (41) comprising a first surface and a second surface opposite the first surface, a signal lead (43) being arranged on the first surface and being in electrically conductive contact with at least one external connection pad (244,245) and a common lead (46) being arranged on the second surface and being in electrically conductive contact with at least one common connection pad (25).

2. The transparent roof assembly according to claim 1, wherein at least two external connection pads (244,245,246) are arranged adjacent to each other and a connection element (41) is provided, the connection element (41) comprising at least two electrically conductive leads (43,44,45), wherein each external connection pad (244,245,246) is electrically connected to one of the electrically conductive leads (43,44,45).

3. The transparent roof assembly according to claim 1, wherein the signal electrode layer (33) comprising at least four electrode segments (231-237) and at least four corresponding external connection pads (241-247), wherein two external connection pads are arranged adjacent to each other in a first group and two other external connection pads are arranged adjacent to each other in a second group, and wherein a first and a second connection element (41) are provided, each connection element comprising at least two electrically conductive leads, wherein each external connection pad of the first group is electrically connected to one of the electrically conductive leads of the first connection element and wherein each external connection pad of the second group is electrically connected to one of the electrically conductive leads of the second connection element.

4. The transparent roof assembly according to claim 1, 2 or 3, wherein the segmented optically switchable panel (2) comprises a circumferent edge (261) and the connection element (41) comprises an external connection section (47), wherein the external connection section (47) extends beyond the circumferent edge (261) of the segmented optically switchable panel (2), the external connection section (47) being configured to connect to an external circuitry.

5. The transparent roof assembly according to claim 1, wherein the segmented optically switchable panel (2) is moveably arranged and wherein a flexible cable (6,7) is arranged between a frame (5) of the transparent roof assembly and the moveably arranged segmented optically switchable panel (2).

6. A vehicle comprising the vehicle roof assembly according to claim 1.

## Patentansprüche

1. Transparente Dachbaugruppe für ein Fahrzeugdach (1), wobei die transparente Dachbaugruppe eine segmentierte, optisch schaltbare Platte (2) aufweist, wobei die segmentierte, optisch schaltbare Platte (2) einen schaltbaren Bereich (21) und einen undurchsichtigen Bereich (22) aufweist, wobei die segmentierte, optisch schaltbare Platte (2) eine gemeinsame Elektrodenschicht (34), eine Signalelektrodenschicht (33) und eine schaltbare Materialschicht (35) aufweist, wobei die schaltbare Materialschicht (35) zwischen der gemeinsamen Elektrodenschicht (34) und der Signalelektrodenschicht (33) angeordnet ist, wobei die Signalelektrodenschicht (33) mindestens zwei Elektrodensegmente (231-237) aufweist, wobei jedes Elektrodensegment (231-237) aufweist:
• einen aktiven Abschnitt (234a, 235a), der ein optisch schaltbares Segment im schaltbaren Bereich (21) der segmentierten, optisch schaltbaren Platte (2) bereitstellt, wobei das optisch schaltbare Segment einen ersten optischen Zustand und einen zweiten optischen Zustand aufweist, der sich vom ersten optischen Zustand unterscheidet, und
• einen elektrisch leitenden Abschnitt (234b, 235b) im undurchsichtigen Bereich (22), wobei der elektrisch leitende Abschnitt (234b, 235b) ein externes Anschlusspad (244, 245) aufweist, wobei der elektrisch leitende Abschnitt (234b, 235b) dadurch einen elektrisch leitenden Pfad für einen elektrischen Strom bereitstellt, und
wobei mindestens ein elektrisch leitender Abschnitt (234a) eine erste Breite (W1) an einer Grenze zwischen dem aktiven Abschnitt (234a, 235a) und dem elektrisch leitenden Abschnitt (234b, 235b) aufweist und eine zweite Breite (W2) an dem externen Anschlusspad (244, 245) aufweist, wobei die erste Breite (W1) und die zweite Breite (W2) im Wesentlichen senkrecht zur Breite der optisch schaltbaren Platte (2) verlaufen,
wobei im Betrieb der elektrische Strom zwischen dem externen Anschlusspad (244, 245) und dem optisch schaltbaren Segment fließt, und wobei die zweite Breite (W2) kleiner als die erste Breite (W1) ist,
wobei die Signalelektrodenschicht (33) auf einem Signalelektrodenträger (26) angeordnet ist, mindestens zwei externe Anschlusspads (244, 245) in einem Signalverbindungsabschnitt (234b, 235b) auf dem Signalelektroden-Träger im undurchsichtigen Bereich (22) angeordnet sind und die gemeinsame Elektrodenschicht (34) auf einem gemeinsamen Elektrodenträger (27) angeordnet ist, wobei mindestens ein gemeinsames Anschlusspad (25) in einem gemeinsamen Verbindungsabschnitt angeordnet ist, **dadurch gekennzeichnet, dass** der gemeinsame Verbindungsabschnitt dem Signalverbindungsabschnitt gegenüberliegt, und
ein Verbindungselement (41) zwischen dem Signalverbindungsabschnitt und dem gemeinsamen Verbindungsabschnitt angeordnet ist, wobei das Verbindungselement (41) eine erste Fläche und eine zweite Fläche, die der ersten Fläche entgegengesetzt ist, aufweist, wobei eine Signalleitung (43) auf der ersten Fläche angeordnet ist und in elektrisch leitendem Kontakt mit mindestens einem externen Anschlusspad (244, 245) steht und eine gemeinsame Leitung (46) auf der zweiten Fläche angeordnet ist und in elektrisch leitendem Kontakt mit mindestens einem gemeinsamen Anschlusspad (25) steht.

2. Transparente Dachbaugruppe gemäß Anspruch 1, wobei mindestens zwei externe Anschlusspads (244, 245, 246) benachbart zueinander angeordnet sind und ein Verbindungselement (41) bereitgestellt ist, wobei das Verbindungselement (41) mindestens zwei elektrisch leitende Leitungen (43, 44, 45) aufweist, wobei jedes externe Anschlusspad (244, 245, 246) elektrisch mit einer der elektrisch leitenden Leitungen (43, 44, 45) verbunden ist.

3. Transparente Dachbaugruppe gemäß Anspruch 1, wobei die Signalelektrodenschicht (33) mindestens vier Elektrodensegmente (231-237) und mindestens vier korrespondierende externe Anschlusspads (241-247) aufweist, wobei zwei externe Anschlusspads in einer ersten Gruppe benachbart zueinander angeordnet sind und zwei weitere externe Anschlusspads in einer zweiten Gruppe benachbart zueinander angeordnet sind, und
wobei ein erstes und ein zweites Verbindungselement (41) bereitgestellt sind, wobei jedes Verbindungselement mindestens zwei elektrisch leitende Leitungen aufweist, wobei jedes externe Anschlusspad der ersten Gruppe elektrisch mit einer der elektrisch leitenden Leitungen des ersten Verbindungselements verbunden ist und wobei jedes externe Anschlusspad der zweiten Gruppe elektrisch mit einer der elektrisch leitenden Leitungen des zweiten Verbindungselements verbunden ist.

4. Transparente Dachbaugruppe gemäß Anspruch 1, 2 oder 3, wobei die segmentierte, optisch schaltbare Platte (2) einen Umfangsrand (261) aufweist und das Verbindungselement (41) einen externen Verbindungsabschnitt (47) aufweist, wobei sich der externe Verbindungsabschnitt (47) über den Umfangsrand (261) der segmentierten, optisch schaltbaren Platte (2) hinaus erstreckt, wobei der externe Verbindungsabschnitt (47) konfiguriert ist, um mit einer externen Schaltung verbunden zu sein.

5. Transparente Dachbaugruppe gemäß Anspruch 1, wobei die segmentierte, optisch schaltbare Platte (2) bewegbar angeordnet ist und wobei ein flexibles Seil (6, 7) zwischen einem Rahmen (5) der transparenten Dachbaugruppe und der bewegbar angeordneten segmentierten, optisch schaltbaren Platte (2) angeordnet ist.

6. Fahrzeug, das die Fahrzeugdachbaugruppe gemäß Anspruch 1 aufweist.

## Revendications

1. Ensemble de toit transparent pour un toit de véhicule (1), l'ensemble de toit transparent comprenant un panneau optiquement commutable (2) segmenté, le panneau optiquement commutable (2) segmenté comprenant une zone commutable (21) et une zone opaque (22), dans lequel le panneau optiquement commutable (2) segmenté comprend une couche d'électrode commune (34), une couche d'électrode de signal (33) et une couche de matériau commutable (35), dans lequel la couche de matériau commutable (35) est agencée entre la couche d'électrode commune (34) et la couche d'électrode de signal (33),
la couche d'électrode de signal (33) comprenant au moins deux segments d'électrode (231-237), chaque segment d'électrode (231-237) comprenant :
• une section active (234a, 235a) fournissant un segment optiquement commutable dans la zone commutable (21) du panneau optiquement commutable (2) segmenté, le segment optiquement commutable comprenant un premier état optique et un second état optique différent du premier état optique ; et
• une section électriquement conductrice (234b, 235b) dans la zone opaque (22), la section électriquement conductrice (234b, 235b) comprenant un plot de connexion externe (244, 245), la section électriquement conductrice (234b, 235b) fournissant ainsi un chemin électriquement conducteur pour un courant électrique ; et
dans lequel au moins une section électriquement conductrice (234a)
comprend une première largeur (W1) à une limite entre la section active (234a, 235a) et la section électriquement conductrice (234b, 235b) et comprend une seconde largeur (W2) au niveau du plot de connexion externe (244, 245), la première largeur (W1) et la seconde largeur (W2) étant sensiblement perpendiculaires à la largeur du panneau optiquement commutable (2), dans lequel le courant électrique, en fonctionnement, s'écoule entre le plot de connexion externe (244, 245) et le segment optiquement commutable, et dans lequel la seconde largeur (W2) est plus petite que la première largeur (W1), dans lequel la couche d'électrode de signal (33) est agencée sur un support d'électrode de signal (26), au moins deux plots de connexion externes (244, 245) sont agencés dans une section de connexion de signal (234b, 235b) sur le support d'électrode de signal (26) dans la zone opaque (22) ;
la couche d'électrode commune (34) est agencée sur un support d'électrode commun (27), au moins un plot de connexion commun (25) étant agencé dans une section de connexion commune, **caractérisé en ce que** la section de connexion commune est opposée à la section de connexion de signal ; et
un élément de connexion (41) est agencé entre la section de connexion de signal et la section de connexion commune, l'élément de connexion (41) comprenant une première surface et une seconde surface opposée à la première surface, un fil de signal (43) étant agencé sur la première surface et étant en contact électriquement conducteur avec au moins un plot de connexion externe (244, 245) et un fil commun (46) étant agencé sur la seconde surface et étant en contact électriquement conducteur avec au moins un plot de connexion commun (25).

2. Ensemble de toit transparent selon la revendication 1, dans lequel au moins deux plots de connexion externes (244, 245, 246) sont agencés adjacents l'un à l'autre et un élément de connexion (41) est prévu, l'élément de connexion (41) comprenant au moins deux fils électriquement conducteurs (43, 44, 45), dans lequel chaque plot de connexion externe (244, 245, 246) est électriquement connecté à l'un des fils électriquement conducteurs (43, 44, 45).

3. Ensemble de toit transparent selon la revendication 1, dans lequel la couche d'électrode de signal (33) comprend au moins quatre segments d'électrode (231-237) et au moins quatre plots de connexion externes (241-247) correspondants, dans lequel deux plots de connexion externes sont agencés adjacents l'un à l'autre dans un premier groupe et deux autres plots de connexion externes sont agencés adjacents l'un à l'autre dans un second groupe, et
dans lequel des premier et second éléments de connexion (41) sont prévus, chaque élément de connexion comprenant au moins deux fils électriquement conducteurs, dans lequel chaque plot de connexion externe du premier groupe est électriquement connecté à l'un des fils électriquement conducteurs du premier élément de connexion et dans lequel chaque plot de connexion externe du second groupe est électriquement connecté à l'un des fils électriquement conducteurs du second élément de connexion.

4. Ensemble de toit transparent selon la revendication 1, 2 ou 3, dans lequel le panneau optiquement commutable (2) segmenté comprend un bord circonférentiel (261) et l'élément de connexion (41) comprend une section de connexion externe (47), dans lequel la section de connexion externe (47) s'étend au-delà du bord circonférentiel (261) du panneau optiquement commutable (2) segmenté, la section de connexion externe (47) étant configurée pour se connecter à une circuiterie externe.

5. Ensemble de toit transparent selon la revendication 1, dans lequel le panneau optiquement commutable (2) segmenté est agencé de manière mobile et dans lequel un câble flexible (6,7) est agencé entre un cadre (5) de l'ensemble de toit transparent et le panneau optiquement commutable (2) segmenté agencé de manière mobile.

6. Véhicule comprenant l'ensemble toit de véhicule selon la revendication 1.
